Europäisches Patentamt

European Patent Office

Office européen des brevets

(11) Numéro de publication : **0 443 946 B1**

# (12) FASCICULE DE BREVET EUROPEEN

(45) Date de publication du fascicule du brevet :
**21.09.94 Bulletin 94/38**

(51) Int. Cl.[5] : **F24F 5/00,** E06B 7/10

(21) Numéro de dépôt : **91400449.4**

(22) Date de dépôt : **20.02.91**

(54) **Fenêtre à effet pariéto-dynamique amélioré.**

(30) Priorité : **21.02.90 FR 9002088**

(43) Date de publication de la demande :
**28.08.91 Bulletin 91/35**

(45) Mention de la délivrance du brevet :
**21.09.94 Bulletin 94/38**

(84) Etats contractants désignés :
**AT BE CH DE DK ES GB GR IT LI LU NL SE**

(56) Documents cités :
**WO-A-87/01155**
**FR-A- 2 528 473**
**GB-A- 2 127 139**

(73) Titulaire : **SAINT-GOBAIN VITRAGE**
**INTERNATIONAL**
**"Les Miroirs"**
**18, avenue d'Alsace**
**F-92400 Courbevoie (FR)**

Titulaire : **ACOME, SOCIETE COOPERATIVE**
**DE TRAVAILLEURS**
**14 rue de Marignan**
**F-75008 Paris (FR)**

(72) Inventeur : **Fremaux, Jacques**
**1 bis, rue Claude Monet**
**F-78380 Bougival (FR)**
Inventeur : **Kozies, Jérome**
**14, avenue des Martyrs de la Liberté**
**F-60200 Compiegne (FR)**
Inventeur : **Brechot, Roland**
**19 bis, rue Jean Grandel**
**F-94360 Bry-sur-Marne (FR)**
Inventeur : **Legue, Louis**
**22, rue Paul Gimont**
**F-92500 Rueil Malmaison (FR)**

(74) Mandataire : **Breton, Jean-Claude et al**
**SAINT-GOBAIN RECHERCHE**
**39, quai Lucien Lefranc**
**F-93300 Aubervilliers Cedex (FR)**

EP 0 443 946 B1

## Description

La présente invention concerne l'isolation des parois d'un local utilisant la circulation de l'air le long de la paroi, technique connue sous le nom d'"'isolation pariéto-dynamique" et plus précisément celle qui utilise l'effet Coanda pour faire circuler l'air le long de la paroi.

L'isolation thermique des locaux du type pariétodynamique consiste classiquement à faire passer de l'air entre deux parois du local voisines, en général parallèles l'une à l'autre. Cet air est pris à l'extérieur et, en pénétrant dans le local, sert à en renouveler l'atmosphère. Le document WO 87/01155 prévoit d'installer une troisième paroi parallèle aux deux premières qui permet ainsi d'allonger le trajet suivi par l'air. Dans ce document la paroi vitrée dirigée vers l'intérieur du local est chauffante et le système pariéto-dynamique participe ainsi au chauffage du local. L'ensemble constitue une triple fenêtre qui est en plus équipée d'une soufflerie.

Mais le principe de l'isolation pariéto-dynamique est également parfois conçu de manière beaucoup plus simple. Une seule paroi est balayée par l'air de renouvellement sur sa face intérieure. Une telle technique fonctionnant grâce à l'effet Coanda a été décrite par exemple dans le brevet français FR 2 528 473. Cette technique permet avec des moyens simples d'abaisser la température de la surface extérieure de la paroi tout en chauffant l'air qui circule le long de la surface intérieure de cette même paroi. Comme dans tous les cas d'isolation pariéto-dynamique, l'abaissement de la température de surface externe diminue les échanges thermiques avec l'extérieur tandis que l'abaissement correspondant de la température de surface interne est totalement compensée par l'échauffement de l'air. On constate donc seulement une diminution des déperditions calorifiques. Cette technique a néanmoins ses limites puisque malgré l'effet Coanda, les filets d'air en mouvement finissent par se détacher de la paroi si bien que la distance sur laquelle l'échange se produit est limitée, il s'ensuit que toute la surface de la paroi ne peut participer au phénomène et que l'amélioration de l'isolation thermique de la paroi reste limitée. D'un autre point de vue, si le procédé permet de limiter les déperditions il ne constitue pas en soi un moyen de chauffage. Le but donné à l'invention est d'élargir le domaine d'utilisation du procédé connu pour améliorer l'isolation tout en fournissant un moyen d'apporter des calories au local.

L'invention propose donc un procédé d'isolation thermique d'une paroi extérieure d'un local par circulation d'air de bas en haut entre ladite paroi extérieure et une paroi intérieure chauffante tel que l'air subisse préalablement un chauffage additionnel, dans lequel l'air chauffé circule à partir du haut de la paroi chauffante par effet Coanda grâce à un déflecteur dirigeant les filets d'air qui en sont issus le long de la surface interne de la paroi chauffante. Il est prévu que la paroi intérieure chauffante comporte comme élément chauffant, une couche conductrice. De préférence, les parois sont constituées de matériaux transparents tels que le verre et la couche conductrice est mince, transparente ou semi-transparente.

Selon le procédé de l'invention, la couche conductrice est avantageusement au contact de l'air circulant de bas en haut entre la paroi intérieure chauffante et la paroi extérieure, elle a une émissivité inférieure à 0,40.

De plus, l'invention concerne un dispositif pour l'isolation pariéto-dynamique d'un local comportant deux parois conçues de manière à permettre la circulation de l'air de bas en haut entre la paroi extérieure et la paroi intérieure qui est chauffante, la sortie de l'air s'effectuant vers l'intérieur du local, en partie haute de la paroi chauffante, dispositif qui comporte un déflecteur Coanda qui dirige les filets d'air qui en sont issus le long de la surface interne de la paroi chauffante.

Le moyen de chauffage de celle-ci est de préférence une couche mince résistante, transparente ou semi-transparente. Elle appartient avantageusement au groupe suivant : couche qui comprend des oxydes métalliques obtenus par pyrolyse de composés organométalliques notamment pulvérulents, couche de métal notamment d'argent, ensemble de couches comprenant au moins une couche de métal.

C'est ainsi par exemple que la couche est obtenue par pyrolyse d'un produit à base de sel organométallique de manière qu'elle comporte un oxyde d'étain dopé au fluor.

Les figures et la description qui suivent permettront de mieux comprendre le fonctionnement de l'invention.

La figure 1 représente schématiquement une bouche d'entrée d'air qui permet à l'air de renouvellement de longer la surface interne d'une paroi.

La figure 2 montre la combinaison dans une même fenêtre, de deux effets pariéto-dynamiques, celui de la double paroi et l'effet Coanda.

La figure 3 montre un dispositif d'essai de fenêtres.

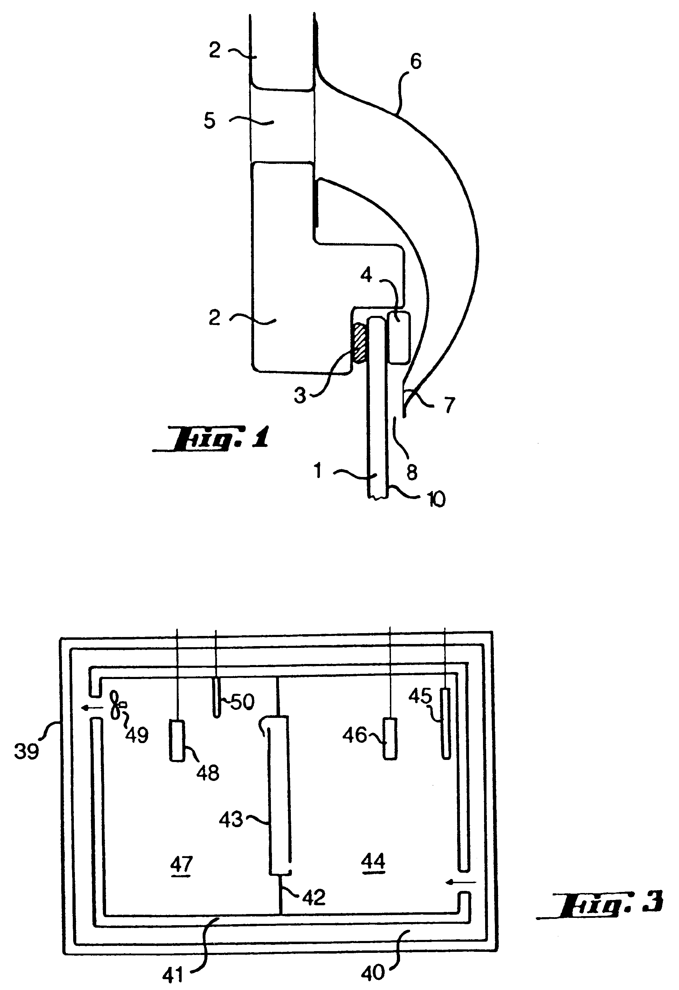

Sur la figure 1 qui représente l'adaptation du système Coanda à l'isolation pariéto-dynamique on voit une paroi 1 par exemple en verre, montée dans un châssis 2 par l'intermédiaire d'un mastic qui reste plastique 3 et d'une parclose 4 fixée par des moyens non représentés. Une entrée d'air 5 permet à l'air extérieur destiné à renouveler l'atmosphère du local de pénétrer dans celui-ci sous l'action d'une différence de pression obtenue en général par un système d'aspiration central qui agit le plus souvent sur plusieurs locaux, toutes les pièces d'un logement par exemple. L'originalité du système Coanda, connu en soi, réside dans la conception du déflecteur 6 en tôle ou en matière plastique, il canalise sur toute la largeur du panneau 1, l'air admis. Ce déflecteur

2

se termine par une fente 7 et par un passage étroit 8. Les filets d'air issus du passage 8 longent la surface 10 de la paroi 1.

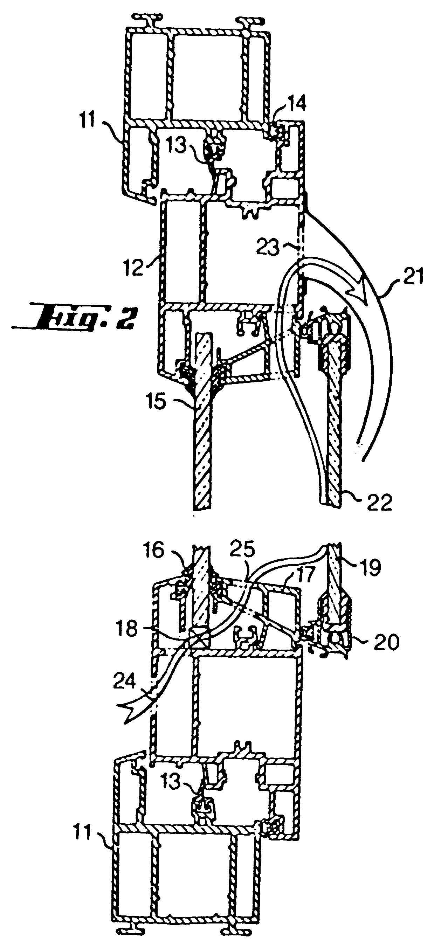

Sur la figure 2 on présente des éléments d'un système selon l'invention. On y voit une fenêtre en plastique 11 avec son ouvrant 12 et ses joints 13, 14. Elle est équipée d'un vitrage simple 15 monté avec des joints 16 et une parclose 17 sur des cales 18. Cet ouvrant est équipé d'un survitrage 19 porté par des profilés 20, il peut être ouvert pour permettre le nettoyage des faces internes des vitrages. Dans la partie supérieure de l'ouvrant, on a fixé - de manière amovible pour permettre la manoeuvre du survitrage 19 - un déflecteur 21 qui permet d'obtenir un effet Coanda sur la face 22 du survitrage 19 dirigée vers l'intérieur du local. Ce système est du même type que celui de la figure 1. La nouveauté ici réside dans le fait que l'air, avant de pénétrer en 23 dans le déflecteur 21 a circulé de bas en haut dans l'espace compris entre les vitrages 15 et 19. Auparavant, l'air a traversé les orifices 24, 25 ménagés dans les profilés de l'ouvrant. Comme précédemment le mouvement de l'air, une première fois de bas en haut entre les deux vitrages 15, 19 et une deuxième, de haut en bas le long de la surface 22 est obtenu par l'action d'un système de ventilation central qui met tout le local en dépression légère par rapport à l'extérieur.

On voit qu'ainsi l'air, avant d'entrer dans le conduit du déflecteur Coanda, a déjà subi un préchauffage en "léchant" l'intérieur du vitrage 19. Lors de son deuxième passage, de haut en bas il se charge une deuxième fois avec les calories extraites du vitrage 19. Le rendement du système pariéto-dynamique Coanda est ainsi amélioré par rapport à celui du Coanda seul.

Mais l'invention prévoit que le vitrage soit équipé sur la face interne de son verre intérieur 19 d'une couche mince conductrice transparente non représentée alimentée en courant électrique par des amenées de courant. La couche est constituée par exemple d'oxydes métalliques obtenus par pyrolyse de sels organométalliques d'étain pulvérulents déposés sur le verre chaud selon le procédé décrit dans le brevet français FR 2 427 141.

Le vitrage chauffant est alors "léché" deux fois par le courant d'air frais extérieur, une fois de bas en haut dans l'espace compris entre les deux vitrages et une deuxième fois de haut en bas par effet Coanda.

Les avantages procurés par l'invention sont importants : le double passage de l'air permet de diminuer sensiblement la température du vitrage chauffant pour une puissance électrique donnée ce qui permet de maintenir un confort et un rendement importants malgré un apport calorifique, lui-même considérable. Ceci permet, dans de nombreux cas d'avoir comme seul moyen de chauffage du local, la fenêtre chauffante.

Des essais comparatifs (I, II, III et IV) ont permis de mesurer ces avantages. La figure 3 représente l'installation utilisée. Elle est à double enceinte, l'enceinte extérieure 39 étant séparée par un anneau de garde 40 de l'enceinte intérieure 41. Toutes les parois sont isolantes. L'enceinte intérieure est séparée en deux parties par une cloison 42 comportant la fenêtre à tester 43, celle-ci dont les dimensions hors tout sont 1,50 m x 1,05 m est équipée successivement de quatre systèmes différents : tout d'abord une combinaison du type de la figure 2 dans laquelle on a supprimé le déflecteur Coanda 21 et où l'on a fait passer directement l'air extérieur au travers de la traverse haute. Mais on a équipé cette fenêtre d'un survitrage 19 qui est chauffant (Essai I). La deuxième combinaison est identique, mais avec déflecteur Coanda. Là aussi, l'air pénètre directement en partie haute (Essai II). La troisième variante est une fenêtre chauffante avec circulation d'air de bas en haut dans la double paroi mais sans effet Coanda (le déflecteur est retiré, Essai III). Quant à la quatrième variante, elle combine, vitrage chauffant, circulation dans la paroi et effet Coanda (Essai IV). C'est elle qui est représentée sur la figure 3. Sur cette figure, la partie droite 44 de l'enceinte intérieure est isotherme à 7°C, sa température est maintenue constante grâce aux effets conjugués d'un évaporateur 45 qui fonctionne en permanence et d'une résistance chauffante 46 qui, grâce à une régulation proportionnelle, stabilise la température ambiante. Sur la partie gauche 47, une résistance chauffante 48 permet, quand on le désire, d'effectuer une régulation de la température ambiante de ce côté là aussi mais à 20°C, cette fois.

On voit par ailleurs un extracteur 49 qui permet de faire circuler de l'air de la partie froide 44 vers la partie chaude 47 de l'enceinte interne en lui faisant traverser la fenêtre en essais. Au cours des essais des quatre combinaisons énumérées ci-dessus, le débit était d'environ 90 m³/h ce qui correspond à l'aération normale (un volume par heure) d'une grande pièce d'habitation. De nombreuses mesures de température étaient effectuées pendant les essais. En particulier : température extérieure de la paroi côté froid (en partie haute), température d'entrée de l'air froid, c'est-à-dire à l'entrée de l'enceinte 44 et de sortie de l'air (éventuellement réchauffé), c'est-à-dire à la sortie de la paroi à tester à l'entrée dans l'enceinte 47. Une sonde adaptée 50 permettait de plus d'effectuer des mesures de températures résultantes c'est-à-dire qu'elle prenait également en compte l'effet du rayonnement thermique.

Au cours des essais le vitrage chauffant avait les dimensions suivantes :

. hauteur : 1,25 m
. largeur : 0,80 m

Il était constitué d'un verre trempé d'épaisseur 4 mm équipé d'une couche d'oxyde d'étain dopé au fluor qui avait une résistance superficielle de 60 ohms par carré et une émissivité de 0,30.

Pour chacune des quatre campagnes d'essais (I, II, III, IV), on commençait par stabiliser les températures dans les deux locaux 44 et 47 à respectivement 7°C et 20°C, cette stabilisation se poursuivait pendant une heure et trente minutes. A la fin de cette période, la résistance 48 était déconnectée tandis que la régulation continuait à fonctionner dans la pièce 44. La campagne d'essais démarrait alors par l'allumage du chauffage du vitrage chauffant soumis à une puissance électrique de 600 Watts, les mesures étant effectuées, ici, après stabilisation d'une heure et demie.

Les résultats pour les quatre configurations testées figurent dans le tableau ci-dessous.

## TABLEAU I

| | Entrée d'air | Sortie d'air | Temp. résult. | Temp. vitr. froid | hauteur d'échange (cm) |
|---|---|---|---|---|---|
| Essai I chauffant seul | 12°C | 13°C | 23°C | 32°C | – |
| Essai II chauffant + Coanda | 12°C | (13°C) | 23°C | 27°C | 80 |
| Essai III chauffant + circulation | 8°C | 31°C | 24°C | 24°C | – |
| Essai IV chauffant + circulation + Coanda | 8°C | (29°C) | 25°C | 23°C | 40 |

Pour l'essai II et l'essai IV, la température de sortie d'air est mise entre parenthèses car elle n'est pas significative puisque cet air s'échauffe ensuite par effet Coanda (d'une manière impossible à mesurer). Cependant la valeur de 29°C de l'essai IV comparée aux 31°C de l'essai III montre que le vitrage chauffant est moins chaud lorsque l'effet Coanda fonctionne. Dans la dernière colonne figure la fraction de la hauteur du vitrage chauffant - mesurée à partir de son bord haut - qui voit sa température modifiée par effet Coanda. Elle est évidemment d'autant plus grande que l'air qui "lèche" la surface du vitrage est plus froid (ces mesures sont effectuées grâce à une caméra infrarouge). Mais le résultat le plus significatif est celui de la température extérieure du côté froid de la fenêtre ("temp. vitr. froid"), plus elle est basse, plus faibles sont les déperditions. L'amélioration apportée par l'effet Coanda apparaît nettement si l'on compare l'essai I (32°C) à l'essai II (27°C) d'une part et de l'autre, l'essai III (24°C) par rapport à l'essai IV (23°C). En effet, les déperditions du côté froid sont proportionnelles à la différence entre cette température et les 7°C de l'enceinte froide. Elles ne sont plus, lors de l'essai IV qu'une faible part (de l'ordre des 2/3) de ce qu'elles étaient dans l'essai I.

Les essais précédents montrent que l'association d'un chauffage de l'air et de l'effet Coanda apporte des avantages importants, que ce soit dans le cas d'une isolation pariéto-dynamique simple ou, a fortiori, comme le propose l'invention, dans le cas de cette même paroi associée à un vitrage chauffant. On constate en particulier dans ce dernier cas, que, comme la hauteur d'échange sur la fenêtre (mesurée à partir du haut) est plus faible (40 cm dans l'exemple IV au lieu de 80, dans l'exemple II) le confort n'est pas diminué. En effet, si une personne se tient au voisinage de la fenêtre, les mouvements de l'air à sa hauteur seront moins importants et par ailleurs, comme d'une part, la température de la paroi interne est légèrement plus élevée dans l'essai IV que dans l'essai II et comme d'autre part, la surface non refroidie par effet Coanda est plus grande, l'effet global produit par le rayonnement thermique de la paroi sera sensiblement plus fort et la sensation de chaleur plus importante.

**Revendications**

1. Procédé d'isolation thermique d'une paroi extérieure (15) d'un local par circulation d'air de bas en haut entre ladite paroi extérieure (15) et une paroi intérieure chauffante (19) tel que l'air subisse préalablement un chauffage additionnel, **caractérisé en ce que** l'air chauffé circule à partir du haut de la paroi chauffante (19) par effet Coanda grâce à un déflecteur (21) dirigeant les filets d'air qui en sont issus le long de la surface interne (22) de la paroi (19).

2. Procédé d'isolation thermique selon la revendication 1, **caractérisé en ce que** la paroi intérieure chauffante (19) comporte comme élément chauffant, une couche conductrice.

3. Procédé d'isolation thermique selon l'une des revendications précédentes, **caractérisé en ce que** les parois (15, 19) sont constituées de matériaux transparents tels que le verre **et en ce que** la couche conductrice (32) est mince, transparente ou semi-transparente.

4. Procédé d'isolation thermique selon la revendication 2 ou 3, **caractérisé en ce que** la couche conductrice (32) est au contact de l'air circulant de bas en haut entre la paroi intérieure chauffante (19) et la paroi extérieure (15) **et en ce qu'**elle a une émissivité inférieure à 0,40.

5. Dispositif pour l'isolation pariéto-dynamique d'un local comportant deux parois (15, 19) conçues de manière à permettre la circulation de l'air de bas en haut entre la paroi (15) extérieure et la paroi intérieure (19) chauffante, la sortie de l'air s'effectuant vers l'intérieur du local, en partie haute de la paroi chauffante (19), **caractérisé en ce qu'**il comporte un déflecteur Coanda (21) qui dirige les filets d'air qui en sont issus le long de la surface interne (22) de la paroi chauffante.

6. Dispositif selon la revendication 5, **caractérisé en ce que** la paroi (19) comporte une couche mince résistante (32) comme moyen de chauffage.

7. Dispositif selon la revendication 6, **caractérisé en ce que** la couche (32) est apparente du côté de la paroi intérieure (19) dirigé vers l'extérieur **et en ce que** l'émissivité de la couche (32) est inférieure à 0,40.

8. Dispositif selon l'une des revendications 6 ou 7, **caractérisé en ce que** les parois (15, 19) sont constituées de matériaux transparents tels que le verre **et en ce que** la couche mince résistante (32) est transparente ou semi-transparente.

9. Dispositif selon l'une des revendications 6 à 8, **caractérisé en ce que** la couche mince (32) est une couche appartenant au groupe suivant : couche qui comprend des oxydes métalliques obtenus par pyrolyse de composés organométalliques notamment pulvérulents, couche de métal notamment d'argent, ensemble de couches comprenant au moins une couche de métal.

10. Dispositif selon la revendication 9, **caractérisé en ce que** la couche est obtenue par pyrolyse d'un produit à base de sel organométallique.

11. Dispositif selon la revendication 10, **caractérisée en ce que** la couche comporte un oxyde d'étain dopé au fluor.

**Patentansprüche**

1. Verfahren zur Wärmeisolierung einer Außenwand (15) eines Raumes durch von unten nach oben gerichtete Luftzirkulation zwischen dieser Außenwand (15) und einer beheizten Innenwand (19) derart, daß die Luft zunächst zusätzlich erwärmt wird, **dadurch gekennzeichnet, daß** die erwärmte Luft ausgehend vom oberen Bereich der beheizten Wand (19) auf Grund des Coanda-Effekts zirkuliert, der von einer Leiteinrichtung (21) hervorgerufen wird, welche die Luftstrahlen die in ihr entstehen, entlang der Innenfläche (22) der wand (19) führt.

2.  Verfahren zur Wärmeisolierung nach Anspruch 1, **dadurch gekennzeichnet, daß** die beheizte Innenwand (19) als Heizelement eine elektrisch leitende Schicht umfaßt.

3.  Verfahren zur Wärmeisolierung nach Anspruch 1 oder 2, **dadurch gekennzeichnet, daß** die Wände (15, 19) aus durchsichtigen Materialien wie Glas bestehen **und daß** die dünne elektrisch leitende Schicht (32) durchsichtig oder halbdurchsichtig ist.

4.  Verfahren zur Wärmeisolierung nach Anspruch 2 oder 3, **dadurch gekennzeichnet, daß** sich die elektrisch leitende Schicht (32) mit der zwischen der beheizten Innenwand (19) und der Außenwand (15) von unten nach oben zirkulierenden Luft in Berührung befindet **und daß** sie eine Emissionszahl von unter 0,40 aufweist.

5.  Vorrichtung zur wanddynamischen Isolierung eines Raumes, der zwei Wände (15, 19) umfaßt, die derart gestaltet sind, daß sie die Luftzirkulation zwischen der Außenwand (15) und der beheizten Innenwand (19) von unten nach oben erlauben, wobei sich der Austritt der Luft vom oberen Bereich der beheizten Wand (19) zum Inneren des Raumes richtet, **dadurch gekennzeichnet, daß** sie eine Coanda-Leiteinrichtung (21) enthält, welche die Luftstrahlen die in ihr entstehen entlang der Innenfläche (22) der beheizten Wand führt.

6.  Vorrichtung nach Anspruch 5, **dadurch gekennzeichnet, dass** die Wand (19) als Heizmittel eine dünne Schicht (32) mit elektrischem Widerstand umfasst.

7.  Vorrichtung nach Anspruch 6, **dadurch gekennzeichnet, daß** sich die Schicht (32) an der nach außen gerichteten Seite der Innenwand (19) befindet **und daß** die Emissionszahl der Schicht (32) weniger als 0,40 beträgt.

8.  Vorrichtung Anspruch 6 oder 7, **dadurch gekennzeichnet, daß** die Wände (15, 19) aus durchsichtigen Materialien wie Glas bestehen **und daß** die beständige dünne Schicht (32) durchsichtig oder halbdurchsichtig ist.

9.  Vorrichtung nach einem der Ansprüche 6 bis 8, **dadurch gekennzeichnet, daß** die dünne Schicht (32) eine Schicht ist, die zur folgenden Gruppe gehört: einer Schicht, welche Metalloxide umfaßt, die durch Pyrolyse von insbesondere pulverförmigen metallorganischen Verbindungen erhalten sind, einer Metallschicht aus insbesondere Silber und einem Schichtverbund, der wenigstens eine Metallschicht umfaßt.

10. Vorrichtung nach Anspruch 9, **dadurch gekennzeichnet, daß** die Schicht durch Pyrolyse eines Produkts auf der Grundlage eines metallorganischen Salzes hergestellt ist.

11. Vorrichtung nach Anspruch 10, **dadurch gekennzeichnet, daß** die Schicht ein mit Fluor dotiertes Zinnoxid enthält.

## Claims

1.  Process for the thermal insulation of an external wall (15) of a room by the circulation of air from bottom to top between said external wall (15) and a heating internal wall (19), such that the air undergoes beforehand an additional heating, characterized in that the heated air circulates from the bottom of the heating wall (19) by the Coanda effect as a result of a deflector (21) directing the streams of air passing out of the same along the internal surface (22) of the wall (19).

2.  Thermal insulation process according to claim 1, characterized in that the heating internal wall (19) has as the heating element a conductive layer.

3.  Thermal insulation process according to either of the preceding claims, characterized in that the walls (15,19) are made from transparent materials such as glass and that the conductive layer (32) is thin, transparent or semitransparent.

4. Thermal insulation process according to claim 2 or 3, characterized in that the conductive layer (32) is in contact with the air flowing from bottom to top betwen the heating internal wall (19) and the external wall (15) and in that it has an emissivity below 0.40.

5. Device for the parietodynamic insulation of a room having two walls (15,19) designed so as to permit the circulation of air from bottom to top between the external wall (15) and the heating internal wall (19), the discharge of air taking place towards the inside of the room, in the upper part of the heating wall (19), characterized in that it has a Coanda deflector (21), which directs the streams of air passing out of it along the internal surface (22) of the heating wall.

6. Device according to claim 5, characterized in that the wall (19) has a thin, resistant layer (32) as the heating means.

7. Device according to claim 6, characterized in that the layer (32) is visible from the side of the internal wall (19) directed towards the outside and in that the emissivity of the layer (32) is below 0.40.

8. Device according to either of the claims 6 and 7, characterized in that the walls (15,19) are made from transparent material such as glass and in that the thin, resistant layer (32) is transparent or semitransparent.

9. Device according to any one of the claims 6 to 8, characterized in that the thin layer (32) is a layer belonging to the following group: layer comprising metal oxides obtained by the pyrolysis of in particular pulverulent organometallic compounds, metallic and in particular silver layer, group of layers including at least one metal layer.

10. Device according to claim 9, characterized in that the layer is obtained by the pyrolysis of an organometallic salt-based product.

11. Device according to claim 10, characterized in that the said layer incorporates a fluorine-doped tin oxide.

*Fig. 1*

*Fig. 3*

*Fig. 2*